# EUROPEAN PATENT APPLICATION

(11) **EP 3 121 041 A1**
(43) Date of publication of application: **25.01.2017**
(21) Application number: 15765732.1
(22) Date of filing: 18.02.2015
(51) Int. Cl.: B60H 1/00

(54) **AIR CONDITIONING DEVICE FOR VEHICLE**

(30) Priority: 17.03.2014 JP 2014053104
(71) Applicant: Keihin Corporation, Tokyo 163-0539 (JP)
(72) Inventor: OSHIMI, Haruki, Shioya-gun, Tochigi 329-1233 (JP); OINUMA, Toshiyuki, Shioya-gun, Tochigi 329-1233 (JP); KOIZUMI, Tomohiro, Shioya-gun, Tochigi 329-1233 (JP)
(74) Representative: Weickmann & Weickmann PartmbB
(86) International application number: PCT/JP2015/054358
(87) International publication number: WO 2015/141359

(57) **Abstract**

An inside air/outside air switching unit (14) for constituting an air conditioning device (10) for a vehicle has a filter (52) received in a replaceable manner within a second casing (40) of the inside air/outside air switching unit (14). The filter (52) is held such that the upper end and lower end of the filter (52) are inserted into a set of first and second protrusions (48, 50) protruding from the inner wall surfaces (46a, 46b) of the second casing (40). When the filter (52) is not installed, the first and second protrusions (48, 50) function as air flow resistance increase means for increasing air flow resistance when air having been taken in into the second casing (40) flows. Consequently, the rate of air flow when the air filter (52) is not installed is reduced by a turbulent flow generated by the first and second protrusions (48, 50) and can thereby be set substantially equal to the rate of air flow when the filter (52) is installed.

## Description

### Technical Field

The present invention relates to a vehicular air conditioner (air conditioning device for vehicle) that is mounted in a vehicle for adjusting the temperature in the interior of a vehicle cabin by blowing air into the vehicle cabin, the temperature of the air being adjusted by a heat exchanger.

### Background Art

Heretofore, a vehicular air conditioner, which is mounted in a vehicle, takes in inside air and outside air by a blower fan through an inside/outside air switching device into an air conditioner case having an airflow passage, and after mixing chilled air, which is cooled by an evaporator type of cooling means, and heated air, which is heated by a heater core type of heating means, by operation of a damper inside the air conditioner case at a desired mixing ratio, the mixed air is made to pass from a plurality of outlet ports disposed in the casing and through a blowing duct, and is blown out into the vehicle cabin interior, whereby adjustment of temperature and humidity is carried out in the interior of the vehicle cabin.

With the inside/outside air switching device that is used in a vehicular air conditioner of this type, in general, although a filter is installed therein with the aim of removing dust and the like contained within the outside air, depending on a place of destination of the vehicle or in a lower cost version of the vehicle, cases occur in which the vehicular air conditioner is used without installing the filter.

The present applicant has proposed an air resistance member which, in a vehicular air conditioner without such a filter being installed, is used for maintaining the airflow rate to be substantially equivalent to a case in which the filter is installed (see Japanese Laid-Open Patent Publication No. 2012-111337).

The air resistance member is formed such that the periphery of a resistance plate having a plurality of ventilation openings is surrounded by a substantially rectangular frame body. By arranging the air resistance member at a location where the filter is installed, air resistance is increased by having the air that is taken into the inside/outside air switching device pass through the ventilation openings, and therefore, the air flows to the downstream side while the flow rate thereof is lowered. Consequently, in the case that the filter is not installed, by installing the air resistance member in its place, the airflow rate is maintained substantially equivalent to the case in which the filter is installed.

On the other hand, recently, there is a demand to reduce the number of parts from the standpoint of lowering manufacturing costs in such a vehicular air conditioner.

### Summary of Invention

A general object of the present invention is to provide a vehicular air conditioner in which changes in the airflow rate depending on the presence or absence of installation of a filter can be suppressed, without using another member in place of the filter.

The present invention is characterized by a vehicular air conditioner equipped with an inside/outside air switching unit configured to switch between inside air and outside air and take in the inside air and the outside air, and an air conditioning unit including a flow passage through which air flows, wherein in the inside/outside air switching unit, blown air resistance increasing means is provided, the blown air resistance increasing means being configured to increase blown air resistance when the air flows in an interior of the inside/outside air switching unit, and the blown air resistance increasing means is a bulging portion that bulges out with respect to an inner wall surface of a casing, the bulging portion containing therein a space.

According to the present invention, in the vehicular air conditioner, the blown air resistance increasing means for increasing blown air resistance when the air flows in the interior portion is provided, and the blown air resistance increasing means is constituted from the bulging portion which bulges out with respect to an inner wall surface of the casing and contains therein a space.

Consequently, in the event that the vehicular air conditioner is used without the filter being mounted therein, a portion of the air that is taken into the interior of the casing through the inside/outside air introduction port of the inside/outside air switching unit flows into the bulging portion, whereby the blown air resistance is increased, so that the airflow rate toward the air conditioning unit is lowered. As a result, by intentionally reducing the airflow rate in a state in which there is no blown air resistance without the filter being installed, it is possible for the airflow rate to be made substantially equivalent to the case in which the filter is installed and the filter serves as the blown air resistance. Therefore, it is unnecessary to install an air resistance member or the like in the case that the filter is not installed, and compared to the case in which such an air resistance member is separately provided, the number of parts can be reduced as well as enabling a reduction in manufacturing costs.

### Brief Description of Drawings

FIG. 1 is an overall front view of a vehicular air conditioner according to an embodiment of the present invention;
FIG. 2 is a cross-sectional view taken along line II-II of FIG. 1;
FIG. 3A is a cross-sectional view taken along line IIIA-IIIA of FIG. 1 for a case in which a filter is installed in an inside/outside air switching unit, and FIG. 3B is a cross-sectional view showing a case in which such a filter is not installed in the inside/outside air switching unit of FIG. 3A; and
FIG. 4A is a characteristic curve showing a relationship between a blower fan voltage and an airflow rate toward an air conditioning unit, for a case in which first and second bulging portions are not provided, and FIG. 4B is a characteristic curve showing a relationship between the blower fan voltage and the airflow rate, for a case in which the first and second bulging portions are provided.

### Description of Embodiments

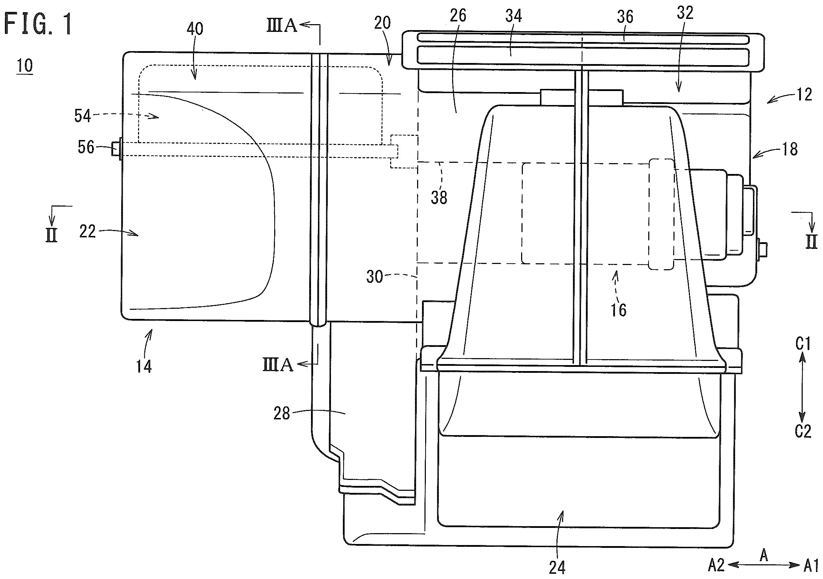

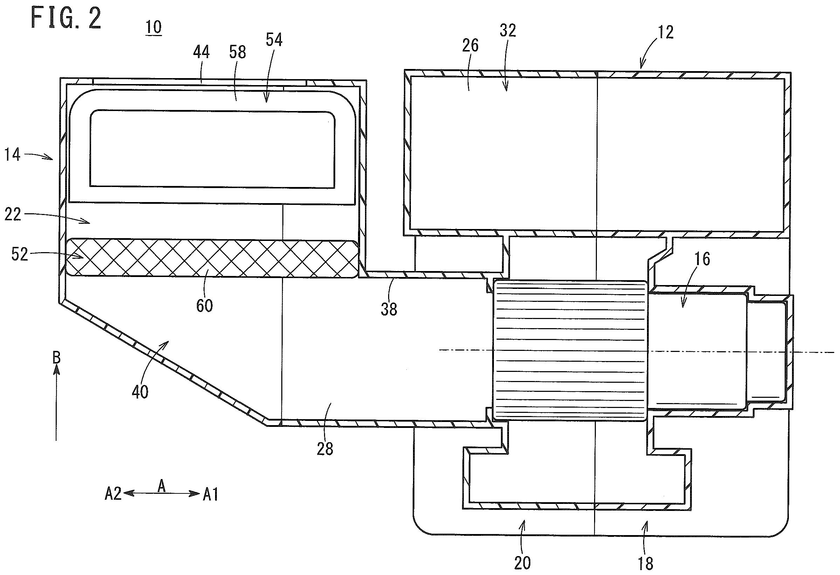

As shown in FIGS. 1 and 2, a vehicular air conditioner 10 includes an air conditioner case 12 constituted by respective airflow passages, an inside/outside air switching unit 14 containing a portion of the air conditioner case 12, and through which outside air and inside air is taken in, and a blower fan 16 disposed in the interior of the air conditioner case 12. Additionally, in the interior of the air conditioner case 12, there are accommodated a heat exchanger (not shown) for cooling and heating the air, and a damper mechanism (not shown), which operates to switch the flow of air that flows through the respective passages.

The air conditioner case 12 is made up from first through third divided cases 18, 20, 22, which can be divided in a widthwise direction (the direction of the arrow A), and a lower case 24, which is disposed to cover a lower portion of the first divided case 18 and the second divided case 20. The aforementioned first through third divided cases 18, 20, 22 and the lower case 24 may be formed from a resin material.

The first divided case 18, for example, is arranged on the driver's side (in the direction of the arrow A1) at a time of being installed in the vehicle, and is formed in a hollow shape, with one end side (in the direction of the arrow A1) in the widthwise direction (the direction of the arrow A) being closed, and the other end side (in the direction of the arrow A2) being open. In addition, the second divided case 20 is connected to the other end of the first divided case 18.

The second divided case 20 is sandwiched between the first divided case 18 and the third divided case 22. The second divided case 20 includes a first connecting portion 26, which is formed on one end side (in the direction of the arrow A1) along the widthwise direction, and is connected to the first divided case 18, and a second connecting portion 28, which is formed on the other end side (in the direction of the arrow A2) along the widthwise direction and is connected to the third divided case 22. A partition wall 30 is formed between the first connecting portion 26 and the second connecting portion 28.

The opened first connecting portion 26 is closed by the first divided case 18 being connected thereto, and the opened second connecting portion 28 is closed by the second divided case 20 being connected thereto, and together therewith, the interior of the first connecting portion 26 and the interior of the second connecting portion 28 communicate through a suction port 38 that opens on the partition wall 30.

In a condition in which the first divided case 18 and the second divided case 20 are connected, in the interior of the first divided case 18 and the first connecting portion 26 in the second divided case 20, the blower fan 16, and an evaporator, a heater core, and a damper mechanism, none of which are illustrated, are accommodated, and respective passages through which air flows are formed therein. More specifically, in the air conditioner case 12, the first divided case 18 and the first connecting portion 26 of the second divided case 20 function as a first casing 32 for the air conditioning unit.

As shown in FIG. 1, a vent blower opening 34 and a defroster blower opening 36, which open upwardly, are formed in the first casing 32. The vent blower opening 34 is disposed to carry out blowing of air in the vicinity of the face of a vehicle occupant, and the defroster blower opening 36 is disposed alongside the vent blower opening 34 to carry out blowing of air in the vicinity of a front window of the vehicle.

On the other hand, in a condition in which the second connecting portion 28 of the second divided case 20 is connected to the third divided case 22, a portion of the inside/outside air switching unit 14 is accommodated in the interior thereof, and the inside/outside air switching unit 14 and the air conditioning unit (first casing 32) communicate through the suction port 38, which opens on the partition wall 30.

The third divided case 22, for example, is arranged on the passenger's side (in the direction of the arrow A2) at a time of being installed in the vehicle, is connected to the second connecting portion 28 of the second divided case 20, and closes the opening of the second connecting portion 28, and together therewith, a portion of the inside/outside air switching unit 14 is accommodated in the interior of the third divided case 22. More specifically, in the air conditioner case 12, the second connecting portion 28 of the second divided case 20 and the third divided case 22 function as a second casing (casing) 40 that makes up the inside/outside air switching unit 14.

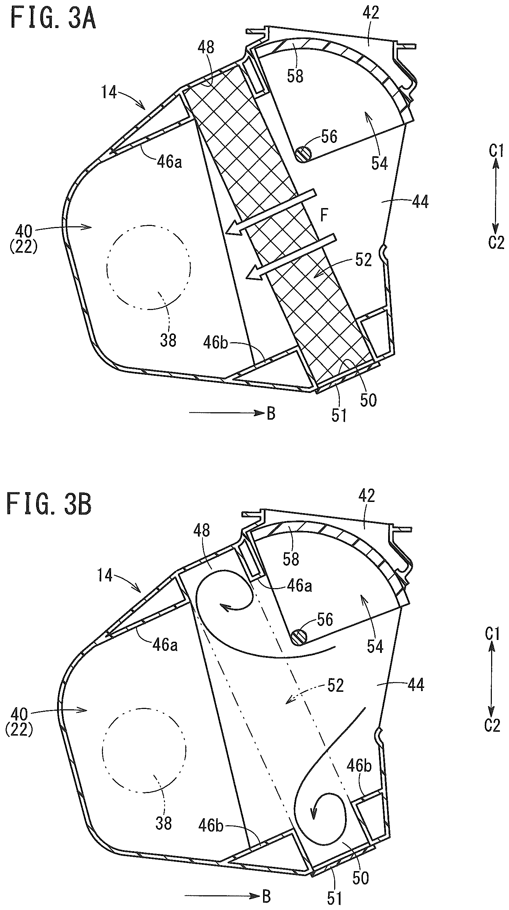

In the inside/outside air switching unit 14, as shown in FIGS. 2 and 3A, an outside air introduction port 42 through which outside air is taken in, and an inside air introduction port 44 through which inside air is taken in are arranged to open in a straddling fashion spanning over the second divided case 20 and the third divided case 22. The outside air introduction port 42 opens upwardly (in the direction of the arrow C1) of the second and third divided cases 20, 22, and is connected to a non-illustrated intake duct, which extends into the interior of the engine room of the vehicle. On the other hand, the inside air introduction port 44 is formed substantially perpendicular to the outside air introduction port 42, and opens toward the front side of the vehicle (in the direction of the arrow B in FIG. 3A).

Further, as shown in FIGS. 3A and 3B, in the interior of the second casing 40, first and second bulging portions 48, 50 are formed, which are substantially perpendicular to the inside air introduction port 44, and which bulge out respectively with respect to upper (in the direction of the arrow C1) and lower (in the direction of the arrow C2) inner wall surfaces 46a, 46b. The first and second bulging portions 48, 50 are formed so as to bulge out, with rectangular shapes in cross section, upwardly and downwardly, respectively, with respect to the inner wall surfaces 46a, 46b, together with being linearly formed along the widthwise direction (the direction of the arrow A in FIG. 2) of the second casing 40. As shown in FIGS. 3A and 3B, the second bulging portion 50 is formed so as to open downwardly, and through the opening thereof, a filter 52 can be inserted and taken out, together with the opening being closed by a lid member 51. In addition, when the filter 52 is accommodated in the interior of the first and second bulging portions 48, 50, an upper end part and a lower end part of the filter are retained by the first and second bulging portions 48, 50.

More specifically, the first bulging portion 48 and the second bulging portion 50 are formed on a substantially straight line so as to be face-to-face with each other.

Stated otherwise, the first and second bulging portions 48, 50 are formed with recessed shapes that bulge out in directions (the directions of the arrows C1, C2) mutually away from each other, and contains therein respective spaces, which are recessed in substantially perpendicular directions to the flow direction (the direction of the arrow F in FIG. 3A) of air that flows toward the filter 52 from the outside air introduction port 42 and the inside air introduction port 44.

As shown in FIG. 3A, in the interior of the second casing 40, there are provided a switching damper 54 for switching the open state of the outside air introduction port 42 and the inside air introduction port 44, and a filter 52 for removing dust and the like contained in the air that flows through the interior.

The switching damper 54, for example, is formed with a fan shape in cross section, with a damper shaft 56 being inserted in one open end thereof. The damper shaft 56 extends along the widthwise direction of the second casing 40 (in the direction of the arrow A in FIG. 1), and ends thereof are disposed rotatably with respect to the third divided case 22 and the partition wall 30 of the second divided case 20. In addition, the switching damper 54 is rotated under a driving action of a non-illustrated actuator, whereby either one of the outside air introduction port 42 or the inside air introduction port 44 is closed selectively by a wall 58 that is formed on an opposite side from the open end of the switching damper 54.

The filter 52 is constituted by surrounding the periphery of a filter part (not shown), which is formed by folding a non-woven fabric multiple times in a corrugated shape, with a substantially rectangular shaped frame body 60. Additionally, by inserting the filter 52 into the interior through a filter introduction port (not shown) that opens on a side portion of the third divided case 22 of the second casing 40, the upper end part of the filter 52 is inserted into the first bulging portion 48, and the lower end part is inserted into the second bulging portion 50. More specifically, the filter introduction port is formed so as to face toward the first and second bulging portions 48, 50.

In addition, by being inserted in the first and second bulging portions 48, 50, the filter 52 is guided along the widthwise direction (in the direction of the arrow A) of the second casing 40, and the filter 52 is disposed between both the outside air introduction port 42 and the inside air introduction port 44, and the suction port 38.

The vehicular air conditioner 10 according to the present embodiment is constructed basically as described above. Next, an explanation shall be given concerning operations and advantages of the vehicular air conditioner 10.

First, by a non-illustrated vehicle occupant operating an operating lever positioned inside the vehicle cabin of the vehicle in which the vehicular air conditioner 10 is installed, a non-illustrated damper mechanism is switched into a cooling operation state or a heating operation state responsive to the operation of the operating lever, and by rotary operation of the blower fan 16 based on a control signal from a non-illustrated controller, air is drawn into the interior of the second casing 40 through either one of the inside air introduction port 44 or the outside air introduction port 42 of the inside/outside air switching unit 14. As shown in FIG. 3A, the air passes through the filter 52, whereby dust and the like is removed, and the flow of the air is rectified, and the air flows (in the direction of the arrow F) in a relatively straight direction toward the downstream side.

The rectified air which has passed through the filter 52 runs into a curved surface portion of the second casing 40, whereby the direction thereof is changed at a substantially right angle toward the side of the first casing 32 (in the direction of the arrow A1 in FIGS. 1 and 2), and after having passed through the suction port 38, is taken into the first casing 32. The air, after undergoing heat exchange by passing through the heat exchanger, is blown out into the vehicle cabin at a desired temperature from the vent blower opening 34, etc.

Next, with reference to FIG. 3B, operations will be described for a case (a filter non-installed state) in which the filter 52 of the inside/outside air switching unit 14 in the vehicular air conditioner 10 is removed. In this case, interior portions of the first and second bulging portions 48, 50 in which the filter 52 is not installed become spaces that communicate with the flow passage.

Under a driving action of the blower fan 16, when air is drawn into the interior of the second casing 40 through either one of the inside air introduction port 44 or the outside air introduction port 42 of the inside/outside air switching unit 14, the air flows toward the downstream side. In so doing, part of the air flows into the interior of the first and second bulging portions 48, 50, which bulge outwardly with respect to the flow passage, whereby the flow of the air becomes turbulent in a swirling manner. By generation of turbulent flow, the airflow rate of the air that flows toward the first casing 32 (air conditioning unit) through the suction port 38 is reduced. As a result, even in the case that the blown air resistance is low due to not installing the filter 52, turbulent flow is intentionally generated by the first and second bulging portions 48, 50, whereby the airflow rate can be made substantially equivalent to the case in which blown air resistance occurs by installation of the filter 52.

More specifically, the first and second bulging portions 48, 50 generate turbulent flow by allowing inflow of part of the air into the interior of the first and second bulging portions 48, 50, and function as a blown air resistance increasing means for increasing blown air resistance.

Stated otherwise, if the filter 52 is not installed, by the airflow rate intentionally being lowered due to generation of turbulent flow, the airflow rate is set substantially the same as the case in which the filter 52 is installed and the filter 52 serves as a blown air resistance to decrease the airflow rate.

The first and second bulging portions 48, 50 are not limited to the above-described case in which they are formed with rectangular shapes in cross section, and insofar as the first and second bulging portions 48, 50 have shapes that are capable of retaining the upper end part and the lower end part of the filter 52, the shapes thereof are not particularly limited.

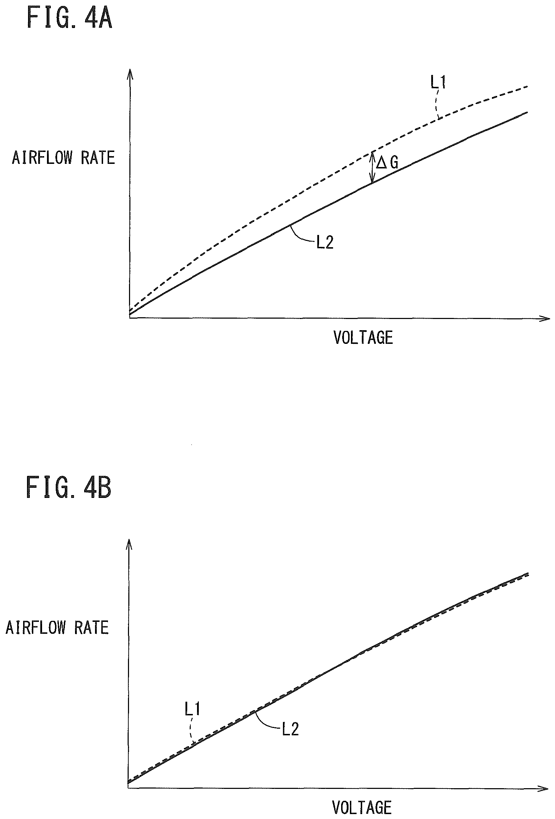

Next, a description will be given, with reference to characteristic curves of FIGS. 4A and 4B, concerning changes in the airflow rate that is supplied to the side of the air conditioning unit depending on the presence or absence of installation of the filter 52 in the case that the first and second bulging portions 48, 50 are provided, and changes in the airflow rate depending on the presence or absence of installation of the filter 52 in the case that the first and second bulging portions 48, 50 are not provided.

FIGS. 4A and 4B show relationships between a voltage when the blower fan 16 is driven, and an airflow rate of air that is supplied toward the air conditioning unit (first casing 32) from the inside/outside air switching unit 14. A characteristic curve L1 for a case in which the filter 52 is not installed is shown by the dashed line, and a characteristic curve L2 for a case in which the filter 52 is installed is shown by the solid line.

First, in the case that the first and second bulging portions 48, 50 are not provided in the second casing 40 of the inside/outside air switching unit 14, as shown in FIG. 4A, it can be appreciated that the airflow rate (dashed line) for the case in which the filter 52 is not installed is increased with respect to the airflow rate (solid line) for the case in which the filter 52 is installed. As the reason therefor, in a case that the filter 52 is not installed, blown air resistance does not occur when the air flows, whereas in a case that the filter 52 is installed, blown air resistance occurs when the air passes through the filter 52, so that the airflow rate becomes lowered somewhat due to such blown air resistance. Thus, a difference occurs between the airflow rates in both the cases.

In contrast thereto, as in the above-described present embodiment, in the case that the first and second bulging portions 48, 50 are provided in the second casing 40 of the inside/outside air switching unit 14, as shown in FIG. 4B, it can be appreciated that the airflow rate (dashed line) for the case in which the filter 52 is not installed is substantially the same as the airflow rate (solid line) for the case in which the filter 52 is installed.

More specifically, in the interior of the second casing 40 that makes up the inside/outside air switching unit 14, by providing the first and second bulging portions 48, 50, which are arranged substantially perpendicular to the flow of air that is taken in through the outside air introduction port 42 or the inside air introduction port 44, it can be appreciated that the airflow rate for the case in which the filter 52 is not installed and turbulent flow is generated by the first and second bulging portions 48, 50 can be substantially the same as the airflow rate for the case in which the filter 52 is installed.

As in the present embodiment, with a vehicular air conditioner 10 in which the opening direction of the outside air introduction port 42 and the inside air introduction port 44 of the inside/outside air switching unit 14 and the opening direction of the suction port 38 of the second divided case 20 are arranged substantially perpendicular to each other, the flow of air in the interior of the second casing 40 of the inside/outside air switching unit 14 becomes complex. Therefore, compared to a case in which the opening direction of the outside air introduction port 42 and the inside air introduction port 44 and the opening direction of the suction port 38 are substantially in the same direction, there is a tendency for the ease with which turbulent flow is generated in the second casing 40 to easily depend on the shapes of the inner wall surfaces 46a, 46b in the second casing 40.

Thus, in the inside/outside air switching unit 14, the first and second bulging portions 48, 50 are provided, which bulge out upwardly and downwardly with respect to the inner wall surfaces 46a, 46b of the second casing 40, and a structure is provided whereby the filter 52 can be retained with respect to the first and second bulging portions 48, 50. Consequently, in the event that the vehicular air conditioner 10 is used without the filter 52 being mounted therein, a portion of the air that is taken into the interior of the second casing 40 through the outside air introduction port 42 or the inside air introduction port 44 of the inside/outside air switching unit 14 flows into the spaces of the first and second bulging portions 48, 50, whereby turbulent flow is suitably generated and the blown air resistance is increased, so that the airflow rate is lowered.

As a result, since the airflow rate in a state in which blown air resistance is small due to the absence of the filter 52 can be made substantially equivalent to the case in which the filter 52 that serves as a blown air resistance is installed, changes in the airflow rate can be suppressed without the need for arranging a blown air resistance member or the like in the case that the filter 52 is not installed. Therefore, compared to the case in which such an air resistance member is separately provided, the number of parts can be reduced as well as enabling a reduction in manufacturing costs, while in addition, it also is possible to reduce the number of assembly steps from the case in which such an air resistance member is installed.

More specifically, by providing the first and second bulging portions 48, 50, which function as a blown air resistance increasing means, in the interior of the second casing 40, the blown air resistance for a case in which the filter 52 is installed in the interior of the second casing 40 can be made substantially equivalent to the blown air resistance for a case in which the filter 52 is not installed.

Further, since the first and second bulging portions 48, 50 double as a retaining means that is capable of retaining the upper end part and the lower end part of the filter 52, compared to a case in which a blown air resistance increasing means and a retaining means for the filter 52 are provided separately, the configuration can be simplified, while in addition, by installation of the filter 52 in the second casing 40, the first and second bulging portions 48, 50 can suitably be closed and generation of turbulent flow can be stopped. Stated otherwise, depending on the presence or absence of the filter 52, the operation and non-operation of the blown air resistance increasing means can easily be switched.

Moreover, concerning the depths (amount of bulging) of the first and second bulging portions 48, 50, assuming that, as in the conventional technique, they function merely as retaining grooves for retaining a filter, there is no problem if the depths thereof are on the order of 5 mm, respectively. However, in order for the first and second bulging portions 48, 50 to function as a blown air resistance increasing means for generating turbulent flow, in the above-described present embodiment, the depths thereof are set on the order of at least 20 mm, respectively.

Furthermore, based on the difference between the airflow rate at a time that the filter 52 is not installed and the airflow rate at a time that the filter 52 is installed (refer to ΔG in FIG. 4A), by suitably setting the shapes and positions of the first and second bulging portions 48, 50, a change in the airflow rate depending on installation and non-installation of the filter 52 can be suppressed.

The vehicular air conditioner according to the present invention is not limited to the aforementioned embodiments, and it is a matter of course that various additional or modified structures may be adopted therein without deviating from the scope of the present invention.

## Claims

1. A vehicular air conditioner (10) comprising an inside/outside air switching unit (14) configured to switch between inside air and outside air and take in the inside air and the outside air, and an air conditioning unit (32) including a flow passage through which air flows,
wherein in the inside/outside air switching unit (14), blown air resistance increasing means is provided, the blown air resistance increasing means being configured to increase blown air resistance when the air flows in an interior of the inside/outside air switching unit (14), and
the blown air resistance increasing means is a bulging portion (48, 50) that bulges out with respect to an inner wall surface (46a, 46b) of a casing (40), the bulging portion (48, 50) containing therein a space.

2. The vehicular air conditioner according to claim 1, wherein the bulging portion (48, 50) comprises a pair of bulging portions (48, 50), which are disposed face-to-face with each other.

3. The vehicular air conditioner according to claim 1 or 2, wherein the bulging portion (48, 50) bulges out in a direction substantially perpendicular to a flow direction of the air that flows in the interior of the inside/outside air switching unit (14).

4. The vehicular air conditioner according to claim 1, wherein an opening that communicates with an exterior of the casing (40) is provided in the bulging portion (48, 50).

5. The vehicular air conditioner according to claim 1, wherein:
the bulging portion (48, 50) increases the blown air resistance by generating turbulent flow;
a filter (52) configured to remove dust and the like contained in the air is detachably accommodated in the casing (40) of the inside/outside air switching unit (14); and
by installation of the filter (52), the filter (52) closes the bulging portion (48, 50) or is inserted into the bulging portion (48, 50), and stops generation of the turbulent flow in the bulging portion (48, 50).

6. The vehicular air conditioner according to claim 1, wherein an opening direction of an inside/outside air introduction port (42, 44) of the inside/outside air switching unit (14), and an opening direction of a suction port (38) through which the air is supplied toward the air conditioning unit (32) are arranged so as to intersect each other.
